# EUROPÄISCHE PATENTSCHRIFT

(11) **EP 0 813 996 B1**
(45) Veröffentlichungstag und Bekanntmachung des Hinweises auf die Patenterteilung: **03.07.2002**
(21) Anmeldenummer: 97107019.8
(22) Anmeldetag: 28.04.1997
(51) Int. Cl.: B60Q 1/44

(54) **Verfahren und Vorrichtung zur Anzeige der Bremsstärke oder der Verzögerung bei einem Fahrzeug**
Method and device for indicating the braking force or deceleration of a vehicle
Procédé et dispositif pour indiquer la force de freinage ou décélération d'un véhicule

(30) Priorität: 17.06.1996 DE 19624046
(43) Veröffentlichungstag der Anmeldung: 29.12.1997
(73) Patentinhaber: Bayerische Motoren Werke Aktiengesellschaft, 80788 München (DE)
(72) Erfinder: Fenk, Johann, 85235 Ebersried (DE)

(56) Entgegenhaltungen:
- EP-A- 0 381 767
- DE-A- 2 806 801
- DE-A- 3 314 305
- DE-U- 9 104 454
- FR-A- 2 649 054
- FR-A- 2 659 610

## Beschreibung

Die Erfindung betrifft ein Verfahren und eine Vorrichtung zur Anzeige der Bremsstärke oder der Verzögerung bei einem Fahrzeug gemäß dem Oberbegriff der Ansprüche 1 bzw. 12.

Zur Warnung von nachfolgenden Verkehrsteilnehmern wird herkömmlicherweise mittels zwei oder drei Bremsleuchten die Bremsverzögerung eines Fahrzeugs angezeigt. Im Straßenverkehr wird momentan dem nachfolgenden Fahrer lediglich mitgeteilt, dass der vorausfahrende Fahrer das Bremspedal betätigt. Über die tatsächliche Stärke der Bremsung bzw. Verzögerung des vorausfahrenden Fahrzeugs erhält der nachfolgende Fahrer unmittelbar über das Bremsleuchtensignal keine Information. Er muss vielmehr durch Beobachtung und Bewertung von zusätzlichen visuellen Informationen erkennen, mit welcher Verzögerung das vorausfahrende Fahrzeug bremst oder wie schnell sich der Abstand verändert. Je nachdem, wie gut er diese sekundären visuellen Informationen erfasst und bewertet, kann er mehr oder weniger gut die Eigengeschwindigkeit und den Abstand an das vorausfahrende Fahrzeug anpassen.

Ziel muss es sein, einen nachfolgenden Fahrer besser über die Bremsvorgänge eines vorausfahrenden Fahrzeugs zu informieren, so dass dieser die Situation besser und schneller abschätzen kann. Insgesamt könnte dadurch die Anzahl der Auffahrunfälle reduziert werden.

Besonders schwierig ist die Erfassung des Bremsvorgangs eines vorausfahrenden Fahrzeugs bei schlechten Sichtverhältnissen wie z. B. Nebel, Regen oder bei Nacht. Die peripheren visuellen Informationen können dann nicht oder nur unzureichend wahrgenommen werden. Folge ist eine verspätete Wahrnehmung und eine längere erforderliche Beobachtungszeit, um die Situation zu erfassen. Als Folge davon kommt es oft zu einer der Situation nicht angepassten Bremsreaktion, beispielsweise zu einer zu geringen Bremsverzögerung oder einer Überreaktion oder zu einer zu späten Bremsbetätigung.

Dass die einstufige Signalisierung eines Bremsvorganges (bremst, bremst nicht) eine nicht ausreichende Information für den nachfolgenden Fahrer beinhaltet, ist schon seit einiger Zeit Diskussionsthema.

Beispielsweise ist in der DE-OS 23 61 356 eine Schaltungsanordnung zur Steuerung der Betätigung der Bremslichter eines Fahrzeugs offenbart. Darin ist beschrieben, dass insbesondere bei schlechter Sicht die sekundären Fingerzeige" beim Betätigen der Bremse eines vorausfahrenden Fahrzeugs nicht rechtzeitig und in optimaler Weise erfasst werden können. Aus diesem Grunde werden zu einem jeweiligen Bremszustand angepasste Anzeigezustände vorgesehen, nämlich ein kurzzeitiges Einschalten einer Bremsleuchte in einem ersten Zustand, eine kontinuierliche Betätigung des Bremslichtes in einem zweiten Zustand und ein impulsweises kurzzeitiges Ausschalten des Bremslichtes in einem dritten Zustand.

Mit Blinksignalen beschäftigen sich auch die DE 43 05 186 C2, die DE 34 31 898 A1, die DE 37 02 718 A1 sowie die DE 38 11 339 A1 und die DE 40 20 464 A1.

In der DE 43 05 186 C2 sowie der DE 40 03 313 A1 ist ferner eine Zusatzinformation über die Bremsstärke anhand einer Vergrößerung der aufleuchtenden Fläche der jeweiligen Bremsleuchte angegeben.

In der DE 31 19 386 A1 schließlich werden Variablen ermittelt, von denen wenigstens eine von der Betätigung des Bremspedals abhängt. Aufgrund der Variablen, die der Verzögerung eines vorausfahrenden Fahrzeugs entspricht, wird die Lichtstärke der Bremsleuchten bestimmt.

Aus der FR-2 649 054 A1 ist eine Signaleinrichtung bei einem Fahrzeug bekannt, welches einem nachfolgenden Fahrzeug eine unterschiedliche Bremsbetätigung anzeigen kann. Je nach Betätigungsstärke des Bremspedals werden verschiedene Lichtsignale erzeugt. Bei einer normalen Bremsbetätigung werden in herkömmlicher Weise Bremsleuchten aktiviert. Bei einer stärkeren Bremsbetätigung werden innenliegende zusätzliche Leuchtflächen zugeschaltet. Eine übermäßige Bremsbetätigung wird dadurch angezeigt, dass zwischen den beiden äußeren Bremsleuchten liegende zentrale weitere Bremsleuchten mit unterschiedlichen Farben aktiviert werden.

Nachteilig bei allen vorgenannten Verfahren oder Vorrichtungen ist die Tatsache, dass die einem bestimmten Bremsverhalten zugeordneten optischen Informationen, insbesondere die Blinkinformationen, meist erst gelernt werden müssen, um sie dem entsprechenden Bremsverhalten zuordnen zu können. Das durch einen solchen Lernvorgang Gelernte muss bei der späteren Anwendung - zumindest in einer Anfangsphase - über einen bewussten Denkschritt abgerufen werden. Ein solcher bewusst durchgeführter Denkschritt erfordert mehr oder weniger Zeit für die Erkennung der Bedeutung der aufgenommenen optischen Signale. Diese Zeit ist gerade in kritischen Situationen äußerst knapp, so dass sie möglichst gering gehalten werden muss.

Aufgabe der vorliegenden Erfindung ist es, ein Verfahren und eine Vorrichtung der eingangs genannten Art weiterzubilden, so dass detaillierte Verzögerungs- und Bremsinformationen in kürzester Zeit erfasst und zugeordnet werden können, ohne dass es eines Lemprozesses bedarf.

Diese Aufgabe wird verfahrensmäßig durch die im Anspruch 1 und vorrichtungsmäßig durch die im Anspruch 12 angegebenen Merkmale gelöst.

Einen wesentlichen Kernpunkt der vorliegenden Erfindung bildet die Berücksichtigung von Stimulusfaktoren, also von bereits bekannten Effekten, welche bei einem Verzögerungsvorgang auftreten und im wesentlichen vom Unterbewusstsein aufgenommen und verarbeitet werden. Wird ein vorausfahrendes Fahrzeug, welches sich bislang mit gleicher Geschwindigkeit wie das nachfolgende Fahrzeug bewegt hat, abgebremst, so treten eine Reihe von sekundären Effekten auf, die durch die Verzögerung mittelbar und die relative Annäherung beider Fahrzeuge unmittelbar erzeugt werden.

Wird ein Bremsvorgang eines vorausfahrenden Fahrzeugs eingeleitet und verkürzt sich dadurch der Relativabstand zwischen zwei Fahrzeugen, so kommt es dadurch für den Fahrer des Folgefahrzeugs zum einen zu einer Veränderung der Lichtintensität der Bremsleuchten. Zum anderen tritt bei einer Annäherung zweier Fahrzeuge infolge der Veränderung des visuellen Beobachtungswinkels der Effekt einer Größenveränderung der Leuchtflächen der Bremsleuchten sowie einer Lageveränderung der Leuchtflächen auf.

Bei einer stärkeren Bremsung eines vorausfahrenden Fahrzeugs tritt femer ein "Bremsnicken" auf, was in einem Anheben der Bremsleuchten resultiert. Auch diese Information ist aus Erfahrungen einem Fahrzeugbediener bekannt. Er muss die Interpretation aller vorgenannten visuellen Reize und Informationen nicht lernen. Sie sind bereits derart eingeübt und -geprägt, dass sie ohne einen Lernprozess unmittelbar und im wesentlichen vom Unterbewusstsein umgesetzt werden können. Mit den oben genannten Maßnahmen werden die Stimulusfaktoren, die als visuelle Information mit den Bremsleuchten dargestellt werden, optimal berücksichtigt. Die üblicherweise auftretenden sekundären Effekte bei einem Bremsvorgang werden gezielt zur Codierung der Bremsstärke angewendet.

Gemäß der im Anspruch 1 angegebenen Alternativen erfahren die Leuchtschwerpunkt der jeweils einer Bremsleuchte zugeordneten aufleuchtenden Fläche eine der Stärke der Verzögerung entsprechende Lageveränderung. Bei den Leuchtschwerpunkten handelt es sich um denjenigen Punkt einer Leuchtfläche, der in gleicher Weise von der aufleuchtenden Fläche - eben schwerpunktmäßig - umgeben ist.

Eine solche Lageveränderung kann darin bestehen, dass sich die Leuchtschwerpunkte von aufleuchtenden Flächen zweier nebeneinander angeordneten Bremsleuchten eines Fahrzeugs relativ zueinander nach außen bewegen. Dies nutzt den Effekt aus, der durch ein sich näherndes Fahrzeug erzeugt wird, bei dem die Bremsleuchten durch Veränderung des Beobachtungswinkels scheinbar auseinanderwandern.

Femer können die Leuchtschwerpunkte der aufleuchtenden Bremsleuchten mit zunehmender Verzögerung nach oben bewegt werden, wodurch der Effekt des Bremsnickens eines Fahrzeugs ausgenützt wird. Je nach Verzögerungsstärke bekommt der nachfolgende Fahrzeugbediener somit eine verstärkte Information darüber, mit welcher Stärke das vorausfahrende Fahrzeug verzögert.

Bei einem sich nähernden Fahrzeug vergrößem sich auch die beleuchteten Flächen der Bremsleuchten, was durch die vorzugsweise Ausführungsform des Verfahrens gemäß Anspruch 2 ausgenützt wird.

In gleicher Weise wirkt sich die Zunahme der Helligkeit der aufleuchtenden Fläche einer Bremsleuchte aus. Eine heller leuchtende Anzeige kann in natürlicher Weise auf eine stärkere Bremsung zurückgeführt werden, ohne dass diese Beziehung vorher gelemt werden müsste.

Gemäß einer vorteilhaften Ausführungsform ist zumindest eine Bremsleuchte zusätzlich angeordnet, die erst ab einer bestimmten Verzögerungsstärke aufleuchtet.

Die Aufmerksamkeit eines nachfolgenden Fahrzeugbedieners wird dann in verstärktem Maße in Anspruch genommen, wenn die Anzeigeänderung, beispielsweise die Lageveränderung, die Intensitätsveränderung oder die Größenveränderung der aufleuchtenden Fläche, in diskreten Schritten abläuft. Durch einen "Sprung" der aufleuchtenden Fläche wird in verstärktem Maße signalisiert, dass sich die Verzögerung nunmehr in einem anderen, möglicherweise gefährlicheren Bereich befindet. Vorzugsweise wird dabei eine zwei- oder dreistufige Anzeige verwendet.

Um die Anzeige besser zuordnen zu können, ist gemäß einer vorteilhaften Ausführungsform vorgesehen, bei Durchführung einer Bremsung mit einem bestimmten Verzögerungswert vor Anzeige der diesem Verzögerungswert entsprechenden optischen Bremsinformation alle vorgeschalteten, einer geringeren Verzögerung entsprechenden Bremsanzeigestufen der Reihe nach zu durchlaufen. Durch das der Reihe-nach-durchlaufen der vorhergehenden Bremsanzeigeinformationen kann der Fahrzeugbediener eines nachfolgenden Fahrzeugs die Verzögerung besser abschätzen, da er weiß, dass die Anzeige nicht einer Bremsung in einem unteren Bereich, sondern in einem schrittweise darüber befindlichen Bereich zuzuordnen ist. Somit kann eine Verwechslung von einzelnen Anzeigstufen ausgeschaltet werden.

Gemäß weiteren vorteilhaften Ausführungsformen werden zur Erzeugung des der Verzögerung entsprechenden Signals die Bremspedalbetätigung (z. B. Bremspedalkraft oder Geschwindigkeit der Pedalbetätigung) und/oder der Bremsdruck in einem Bremskreislauf und/oder der Betrieb eines Anti-Blockiersystems und/oder der Reibungskoeffizient zwischen Straße und Rädern eines Fahrzeugs und/oder die Betätigung des Gaspedals ausgewertet. Natürlich ist es auch möglich, weitere Informationen auszuwerten, die Aufschluss über eine Beschleunigung oder Verzögerung des Fahrzeugs geben.

Die Erfindung wird nachfolgend - auch hinsichtlich weiterer Merkmale und Vorteile - mit Bezug auf die beiliegenden Zeichnungen erläutert, in denen
- Fig. 1a bis 1c: jeweils eine rechte und linke Bremsleuchte eines Fahrzeugs mit unterschiedlich aufleuchtender Fläche darstellen, wobei sich die Größe der Fläche ohne bevorzugte Richtung von Stufe 1 bis Stufe 3 vergrößert. Diese Ausführungsform gehört zum Stand der Technik.
- Fig. 2a bis 2c: eine Darstellung wie Fig. 1a bis 1c ist, jedoch eine Lageveränderung der aufleuchtenden Fläche je nach Bremsstärke nach außen erfolgt,
- Fig. 3a bis 3c: eine Darstellung wie Fig. 1a bis 1c ist, wobei eine Lageveränderung der aufleuchtenden Fläche mit zunehmender Bremsstärke nach oben erfolgt,
- Fig. 4a bis 4c: eine Darstellung wie in den Fig. 1a bis 1c ist, wobei die aufleuchtende Fläche der Bremsanzeige mit zunehmender Bremsstufe von innen unten beginnend nach außen und oben hin zunimmt und
- Fig. 5a bis 5c: eine Darstellung wie in den Fig. 4a bis 4c ist, wobei zusätzlich jeweils ein hochgesetzter zentraler Bremsleuchtkörper angeordnet ist.

Bei der Erläuterung der vorliegenden speziellen Ausführungsform werden die Vorrichtungseinheiten, welche zur Durchführung des Verfahrens notwendig sind, nicht beschrieben, da diese allgemein bekannt sind. So ist beispielsweise eine Signalerzeugungseinrichtung bekannt, welche ein einer Verzögerung entsprechendes Signal erzeugt. Dazu bedarf es beispielsweise eines Sensors zur Erfassung der Bremspedalbetätigung, des Bremsdruckes oder eines sonstigen Indikators, der angibt, mit welcher Stärke das Fahrzeug abgebremst wird. Auch ist der Einsatz eines Beschleunigungs- bzw. Verzögerungssensors möglich. Eine Steuereinrichtung empfängt das von der Signalerzeugungseinrichtung generierte Signal und veranlaßt eine Anzeigeeinrichtung in einer vorgegebenen Weise, der Verzögerung entsprechend aufzuleuchten. Werden von der Steuereinrichtung bestimmte Vergleichswerte benötigt, so können diese in einem Speicher abgelegt sein.

Bei der Anzeigeeinrichtung handelt es sich herkömmlicherweise um zwei oder drei Bremsleuchten, welche am Heck eines Fahrzeugs angeordnet sind.

Im folgenden werden lediglich die aufleuchtenden Flächen an diesen Anzeigeeinrichtungen erläutert, welche auf einen Fahrer eines Folgefahrzeugs einen bestimmten stimulierenden Effekt ausüben.

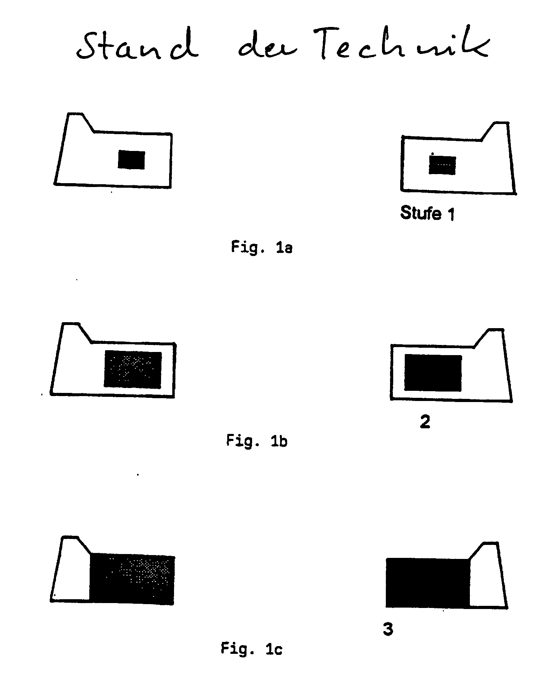

In den Fig. 1a bis 5c sind jeweils zwei Bremsleuchten schematisch dargestellt, die am Heck eines Fahrzeugs angeordnet sind. Innerhalb der Bremsleuchteneingrenzung erscheint je nach Stufe eine dunkle Fläche, welche die aufleuchtende Fläche der Bremsleuchte bei einem Bremsvorgang darstellt.

In den Fig. 1a bis 1c ist eine Änderung der Größe der Fläche ohne bevorzugte Richtung dargestellt. Je nach Verzögerungsstärke leuchtet zunächst bei kleiner Verzögerung eine kleinere Fläche auf (Stufe 1 in Fig. 1a), bei mittlerer Verzögerung eine größere Fläche (Stufe 2 in Fig. 1b) und bei starker Verzögerung wird die Bremsfläche großflächig ausgeleuchtet (Stufe 3 in Fig. 1c).

Diese Vorgehensweise nutzt den Effekt aus, daß ein sich näherndes Fahrzeug größer wird und auch die Heckleuchten in zunehmender Weise größer erscheinen. Bei dem Übergang von einer Stufe zur anderen wird dieser Effekt ausgenutzt und verstärkt, so daß der Fahrzeugbediener eines nachfolgenden Fahrzeugs sofort auf eine stärkere Bremsung eines vorausfahrenden Fahrzeugs aufmerksam wird und auch die Verzögerungsstärke abschätzen kann.

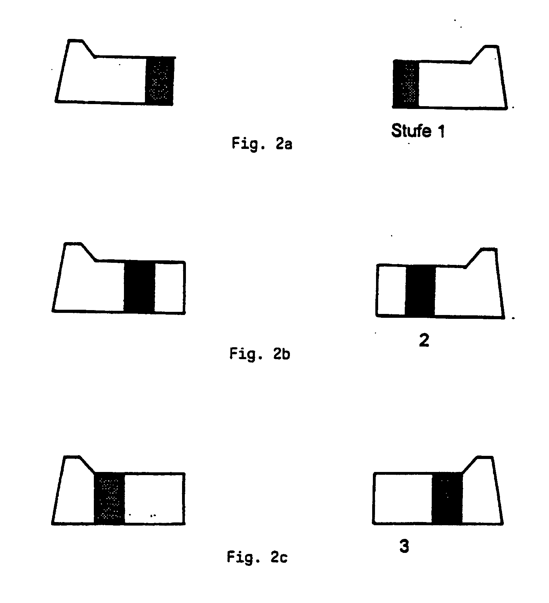

Von großer Bedeutung hierbei ist, daß aus der Erfahrung eines Fahrzeugbedieners dieser Effekt nicht mehr gelernt werden muß. Er ist bereits im Wissen des Fahrers enthalten, und zwar im wesentlichen im Unterbewußtsein. Aus diesem Grunde muß der Fahrer bei der Aufnahme eines von einer Bremsleuchte abgegebenen Signals, welches die Bremsinformation detaillierter darstellt, nicht einen aktiven Denkvorgang vornehmen, der wichtige Zeit kosten könnte. Die letztgenannten Ausführungen gelten auch für alle nachfolgenden Ausführungsbeispiele von Verfahren gemäß den Fig. 2a bis 5c.

Es hat sich als vorteilhaft herausgestellt, die einzelnen Stufen nicht diskret ineinander übergehen zu lassen, da der Fahrer möglicherweise solche Veränderungen nicht so rasch aufnehmen kann. In den vorliegenden Aüsführungsbeispielen der Fig. 1a bis 5c werden die Bremsleuchten in drei diskreten Stufen betrieben. Alternativ können auch zwei oder mehr als drei Stufen gewählt werden. Die kleinste Stufe ist einem Verzögerungsbereich mit geringerer Verzögerung zugeordnet. Die mittlere Stufe ist einem mittleren Verzögerungsbereich zugeordnet und die dritte Stufe ist einem hohen Verzögerungsbereich zugeordnet. Dabei können Zusatzinformationen wie der Reibwert zwischen Fahrbahn und Fahrzeugreifen sowie beispielsweise der Betrieb eines Anti-Blockiersystems bei der Einteilung solcher Verzögerungsbereiche Einfluß haben. So ist es bekannt, daß eine bestimmte Verzögerung auf Eis bereits die maximale Verzögerung sein kann - also eine Notbremsung -, wogegen der gleiche Verzögerungswert auf einer trockenen Fahrbahn im Bereich einer mittleren Verzögerung liegt.

Bei einem Betrieb der Bremsleuchten in diskreten Stufen werden auch bei sofortiger Betätigung des Bremspedals mit einer mittleren oder größeren Stärke, welche in einer mittleren oder höheren Verzögerung resultieren, die vorhergehenden Stufen der Reihe nach durchlaufen. Wird also in den Ausführungsbeispielen der Fig. 1a bis 5c jeweils eine Verzögerung erreicht, die der Stufe 3 entspricht, so werden vor Anzeige der Stufe 3 die Stufen 1 und 2 in dieser Reihenfolge angezeigt. Damit erhält der Fahrer des Nachfolgefahrzeugs eine Information, wie groß die Verzögerung ist, da er vom kleineren zum größeren Wert geführt wird. Im übrigen wirkt sich diese Art der Anzeige auch dahingehend aus, daß der Fahrer den Eindruck erhält, das vor ihm herfahrende Fahrzeug "springt" auf ihn zu. Durch diesen Effekt wird seine Aufmerksamkeit vergrößert, so daß er die Bremssituation entsprechend gut einschätzen und seine eigene Bremsreaktion in optimaler Weise anpassen kann.

Im Ausführungsbeispiel der Fig. 2a bis 2c sind ebenfalls drei Stufen für den Betrieb der Bremsleuchten vorgesehen, wobei je nach Stufe und mit zunehmender Verzögerung eine Bewegung der beiden aufleuchtenden Flächen relativ zueinander nach außen erfolgt. Damit vergrößert sich der Abstand der beiden Flächen zueinander, was den Effekt einer Annäherung des vorausfahrenden Fahrzeugs erzielt.

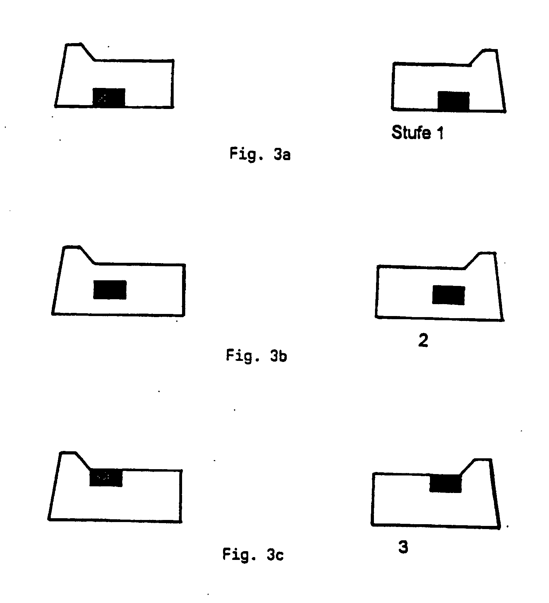

Im Ausführungsbeispiel der Fig. 3a bis 3c sind ebenfalls drei Stufen entsprechend drei Verzögerungsbereichen dargestellt, wobei sich mit zunehmender Verzögerung die aufleuchtende Fläche nach oben bewegt. Dies nützt denjenigen Effekt aus, daß ein Fahrzeug bei Verzögerung vome einknickt bzw. die Hinterachse entlastet wird und sich die Bremsleuchten etwas anheben. Auch diese visuelle Information muß nicht gelernt werden, sondern ist bereits im Wissen eines Fahrzeugbedieners vorhanden.

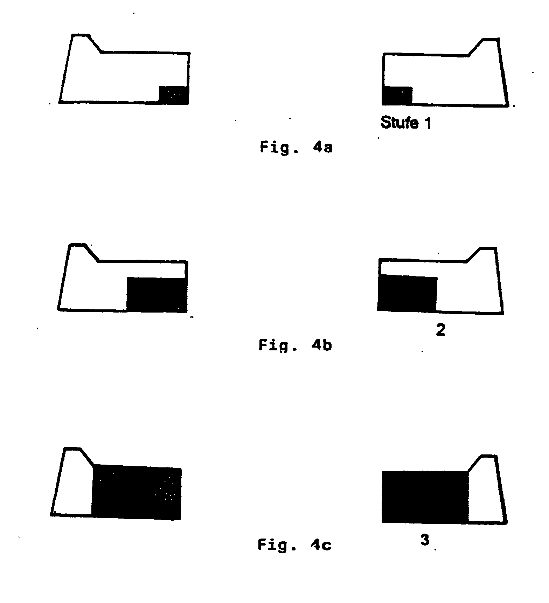

Im Ausführungsbeispiel der Fig. 4a bis 4c sind ebenfalls drei den entsprechenden Verzögerungsbereichen zugeordnete Stufen für den Betrieb der Bremsleuchten dargestellt, wobei eine Kombination der vorgenannten Ausführungsbeispiele dargestellt ist. Mit zunehmender Verzögerung und höherer Stufe (Stufe 1 bis 3) werden die aufleuchtenden Flächen größer und die Leuchtschwerpunkte der aufleuchtenden Flächen verlagern sich nach außen und nach oben.

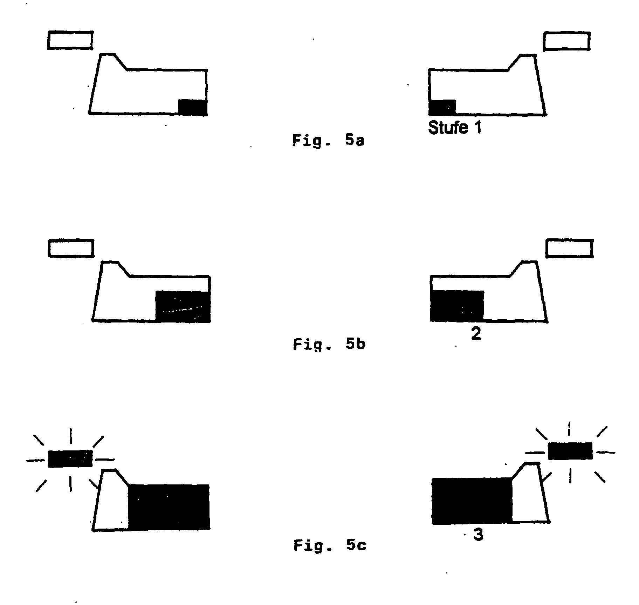

Schließlich ist in den Fig. 5a bis 5c ein Ausführungsbeispiel dargestellt, wobei jeder Bremsleuchte eine zusätzliche Leuchte zugeordnet ist, welche im Falle einer Notbremsung betrieben wird. Ansonsten entspricht das Ausführungsbeispiel der Fig. 5a bis 5c dem der Fig. 4a bis 4c.

Über die vorgenannten Ausführungsbeispiele hinaus kann auch die Lichtintensität entsprechend der jeweiligen Verzögerung bzw. Verzögerungsstufe verändert werden. Auch dies berücksichtigt einen Effekt, der auftritt, wenn sich ein Fahrzeug einem anderen nähert, nämlich, daß die Bremslichter heller werden.

Es können natürlich auch kontinuierliche Veränderungen entsprechend einer jeweiligen Verzögerung stattfinden, oder die Anzahl der Signalstufen verändert werden. Dies ist jedoch nicht immer sinnvoll, da beispielsweise bei einer Erhöhung der Zahl der Signalstufen dies die Unterscheidungsfähigkeit des Beobachters überfordem würde oder eine differenzierte Zuordnung der Anzeige zu einem Bremsvorgang nicht mehr möglich wäre. Zwar kann eine zusätzliche Aufmerksamkeitssteigerung eines nachfolgenden Fahrers (z. B. bei Gefahrenbremsungen oder bei stehenden Fahrzeugen) durch periodische, kurze Lichtimpulse erzielt werden. Die Frequenzcodierung ist jedoch nicht zur Darstellung der Bremsstärke geeignet.

Durch die vorgenannten Ausführungsbeispiele wurde das Ziel auf einfache und kostengünstige Weise erreicht, die Anzeige des Bremsvorgangs so zu gestalten, daß dem nachfolgenden Fahrer mehr und differenziertere Informationen über die Verzögerung des Fahrzeugs zur Verfügung gestellt werden. Die Bremsstärke kann differenziert angezeigt werden und durch die optimale Berücksichtigung von Stimulusfaktoren, die als visuelle Informationen mit den Bremsleuchten dargestellt werden. Dabei wird eine dem jeweiligen Fahrzeugbediener bekannte Erfahrung ausgenützt, so daß kein Lemvorgang erforderlich ist und keine Zeit beim Bremsen verlorengeht Bei der Berücksichtigung der Stimulusfaktoren werden die optischen Wahrnehmungen und Beobachtungen, die der Fahrer beim Annäherungsvorgang eines vorausfahrenden Fahrzeugs wahrnimmt, gezielt zur Codierung der Bremsstärke verwendet. Die vorliegenden Ausführungsformen können noch mit weiteren Möglichkeiten zur Codierung der Anzeige verbunden werden, beispielsweise mit einer Formveränderung. So könnte ein Dreieck oder eine achteckige Kontur aufleuchten oder sich auch die Farbe der Bremsleuchte ändern (z. B. grün, gelb, rot).

Durch die differenzierte Anzeige der Bremsstärke unter Ausnutzung von Stimulusfaktoren ist ein zusätzliches Sicherheitspotential bei Nachfolgefahrten durch Minimierung der Zeit erschlossen worden, so daß die Stärke einer Bremsung eines vorausfahrenden Fahrzeugs richtig erkannt wird, wenn dessen Bremsleuchten betätigt werden. Dies führt zu einer Reduzierung von Auffahrunfällen, die durch unangepaßtes Bremsverhalten ausgelöst werden und führt zu einer Verbesserung der Kolonnenstabilität.

Erreicht wird dies durch eine Verkürzung der erforderlichen Verarbeitungsund Interpretationszeit von optischen Informationen, die Reduzierung von Fehlreaktionen des Fahrers, eine Verbesserung der situationsangepaßten Reaktion in einer kürzest möglichen Zeit sowie die Verbesserung der Kommunikation zwischen vorausfahrendem und nachfolgendem Fahrzeug. Ferner wird das Abstandsverhalten verbessert und die Abweichungen von Geschwindigkeitsveränderungen zweier nachfolgender Fahrzeuge können verringert werden.

Die Stabilisierung von Fahrzeugkolonnen wird durch Reduzierung von Überreaktionen, die durch falsche Einschätzung der tatsächlichen Bremsverzögerung ausgelöst werden, erreicht.

## Patentansprüche

1. Verfahren zur Anzeige der Bremsstärke oder der Verzögerung bei einem Fahrzeug, bei dem
- eine Signalerzeugungseinrichtung ein einer Verzögerung des Fahrzeugs oder einer Bremspedalkraft des Fahrers entsprechendes Signal erzeugt,
- eine Anzeigeeinrichtung, welche zumindest zwei Bremsleuchten aufweist, eine dem jeweiligen Signal zugeordnete Bremsinformation anzeigt und
- eine Steuereinrichtung aufgrund des von der Signalerzeugungseinrichtung zur Verfügung gestellten Signals die Anzeigeeinrichtung ansteuert,
**dadurch gekennzeichnet,**
**dass** sich die Leuchtschwerpunkte von jeweils einer Bremsleuchte zugeordneten, aufleuchtenden Fläche mit zunehmender Bremsstärke relativ zueinander auseinanderbewegen oder dass sich die Leuchtschwerpunkte von jeweils einer Bremsleuchte zugeordneten, aufleuchtenden Fläche mit zunehmender Verzögerung nach oben bewegen, wodurch eine mehr oder weniger starke Verzögerung des Fahrzeugs unter Berücksichtigung von sich im wesentlichen vom Unterbewusstsein erfassten Stimulusfaktoren angezeigt wird.

2. Verfahren nach Anspruch 1,
**dadurch gekennzeichnet,**
**dass** mit zunehmender Verzögerung die aufleuchtende Fläche zumindest einer Bremsleuchte vergrößert wird.

3. Verfahren nach Anspruch 1 oder 2,
**dadurch gekennzeichnet,**
**dass** die Lichtintensität der aufleuchtenden Fläche mit zunehmender Verzögerung zunimmt.

4. Verfahren nach einem der Ansprüche 1 bis 3,
**dadurch gekennzeichnet,**
**dass** zumindest eine Bremsleuchte erst ab einer bestimmten Verzögerungsstärke aufleuchtet.

5. Verfahren nach einem der Ansprüche 1 bis 4,
**dadurch gekennzeichnet,**
**dass** die mit zunehmender Verzögerung einhergehende Anzeigeänderung in diskreten Schritten stattfindet.

6. Verfahren nach einem der Ansprüche 1 bis 5,
**dadurch gekennzeichnet,**
**dass** bei Durchführung einer Bremsung mit einem bestimmten Verzögerungswert vor Anzeige der diesem Verzögerungswert entsprechenden optischen Bremsinformation alle vorgeschalteten, einer geringen Verzögerung entsprechenden Bremsanzeigestufen der Reihe nach durchlaufen werden.

7. Verfahren nach einem der Ansprüche 1 bis 6,
**dadurch gekennzeichnet,**
**dass** zur Erzeugung des der Verzögerung entsprechenden Signals die Bremspedalbetätigung ausgewertet wird.

8. Verfahren nach einem der Ansprüche 1 bis 7,
**dadurch gekennzeichnet,**
**dass** zur Erzeugung des der Verzögerung entsprechenden Signals der Bremsdruck in einem Bremskreislauf ausgewertet wird.

9. Verfahren nach einem der Ansprüche 1 bis 8,
**dadurch gekennzeichnet,**
**dass** zur Erzeugung des der Verzögerung entsprechenden Signals eine Information eines Anti-Blockiersystems ausgewertet wird.

10. Verfahren nach einem der Ansprüche 1 bis 9,
**dadurch gekennzeichnet,**
**dass** zur Erzeugung des der Verzögerung entsprechenden Signals der Reibungskoeffizient zwischen Straße und den Rädem des Kraftfahrzeugs ausgewertet wird.

11. Verfahren nach einem der Ansprüche 1 bis 10,
**dadurch gekennzeichnet,**
**dass** die Art der Betätigung des Gaspedals und/oder des Bremspedals ausgewertet wird.

12. Vorrichtung zur Durchführung des Verfahrens zur Anzeige der Bremsstärke oder der Verzögerung bei einem Fahrzeug gemäß der Ansprüche 1 bis 11, mit
- einer Signalerzeugungseinrichtung, welche ein einer Verzögerung entsprechendes Signal erzeugt,
- einer Anzeigeeinrichtung, welche zumindest zwei Bremsleuchten aufweist, die eine dem jeweiligen Signal zugeordnete Bremsinformation anzeigen und
- einer Steuereinrichtung, welche aufgrund des von der Signalerzeugungseinrichtung zur Verfügung gestellten Signals die Anzeigeeinrichtung ansteuert,
**dadurch gekennzeichnet,**
**dass** die Steuereinrichtung und die Anzeigeeinrichtung derart ausgebildet sind und miteinander zusammenwirken, um die in den Ansprüchen 1 bis 11 genannten Verfahren durchführen zu können.

## Claims

1. A method of indicating the braking force or deceleration of a vehicle, wherein
- a signal generating means generates a signal corresponding to deceleration of the vehicle or force exerted by the driver on the brake pedal of the vehicle,
- an indicator comprising at least two brake lights displays braking information associated with the respective signal and
- a control means actuates the display means in accordance with the signal made available by the signal generating means,
**characterised in that**
the centre points of the illuminated area associated with each brake light move apart from one another as the braking force increases, or the centre point of each illuminated surface associated with a brake light moves outward as the deceleration increases, so that weaker or stronger deceleration of the vehicle is indicated with allowance for stimulus factors detected mainly by the subconscious.

2. A method according to claim 1, **characterised in that** with increasing deceleration, the illuminated surface of at least one brake light increases.

3. A method according to claim 1 or 2, **characterised in that** the light intensity of the illuminated surface increases with increasing deceleration.

4. A method according to any of claims 1 to 3, **characterised in that** at least one brake light is illuminated only above a certain strength of deceleration.

5. A method according to any of claims 1 to 4, **characterised in that** the change of indication associated with increasing deceleration occurs in discrete stages.

6. A method according to any of claims 1 to 5, **characterised in that** when the brake is applied at a given deceleration, all preceding brake indication stages corresponding to lower deceleration are run through in sequence before the optical braking information corresponding to the present deceleration is indicated.

7. A method according to any of claims 1 to 6, **characterised in that** the brake-pedal actuation is used for generating the signal corresponding to the deceleration.

8. A method according to any of claims 1 to 7, **characterised in that** the brake pressure in a brake circuit is evaluated in order to generate the signal corresponding to the deceleration.

9. A method according to any of claims 1 to 8, **characterised in that** information from an anti-lock system is evaluated in order to generate the signal corresponding to the deceleration.

10. A method according to any of claims 1 to 9, **characterised in that** the friction coefficient between the road and the wheels of the vehicle is evaluated in order to generate the signal corresponding to the deceleration.

11. A method according to any of claims 1 to 10, **characterised in that** the manner of actuating the accelerator pedal and/or the brake pedal is evaluated.

12. A method of working the method for indicating the braking force or deceleration of a vehicle according to claims 1 to 11, comprising
- a signal generating means which generates a signal corresponding to a deceleration,
- an indicator means which comprises at least two brake lights which indicate braking information associated with the respective signal, and
- a control means which controls the display means on the basis of the signal made available by the signal generating means,
**characterised in that**
the control means and the indicator are constructed and co-operate so as to work the method set out in claims 1 to 11.

## Revendications

1. Procédé d'affichage de l'intensité du freinage ou de la décélération d'un véhicule selon lequel
- une installation générant un signal crée un signal correspondant à la décélération du véhicule ou de la force d'actionnement de la pédale de frein par le conducteur,
- une installation d'affichage comportant au moins deux feux de frein indique une information de freinage associée au signal respectif, et
- une installation de commande par laquelle le signal fourni par l'installation de génération de signal commande l'installation d'affichage,
**caractérisé en ce que**
les centres de gravité des surfaces éclairées associées à chaque feu de frein se déplacent vers l'extérieur de façon relative, en fonction de l'augmentation de l'intensité de freinage ou les centres de gravité des surfaces éclairées, associées à chaque feu de freinage, se soulèvent avec l'augmentation de la décélération et affichent une décélération plus ou moins forte du conducteur en tenant compte de facteurs de stimulation essentiellement perçus de manière inconsciente.

2. Procédé selon la revendication 1,
**caractérisé en ce que**
la surface éclairée d'au moins un feu de frein augmente en fonction de la décélération.

3. Procédé selon les revendications 1 ou 2,
**caractérisé en ce que**
l'intensité lumineuse de la surface éclairée augmente avec l'augmentation de la décélération.

4. Procédé selon l'une des revendications 1 à 3,
**caractérisé en ce qu'**
au moins un feu de frein augmente seulement à partir d'une intensité de décélération donnée.

5. Procédé selon l'une des revendications 1 à 4,
**caractérisé en ce que**
la variation d'affichage liée à l'augmentation de la décélération se produit dans des étapes discrètes.

6. Procédé selon l'une des revendications 1 à 5,
**caractérisé en ce que**
lors de l'exécution d'une opération de freinage avec une valeur de décélération déterminée, avant l'affichage de cette valeur de décélération, on parcourt toutes les informations optiques de freinage de tous les niveaux d'affichage de freinage correspondant à une décélération plus faible, en procédant par ordre.

7. Procédé selon l'une des revendications 1 à 6,
**caractérisé en ce qu'**
on exploite l'actionnement de la pédale de frein pour générer le signal correspondant à la décélération.

8. Procédé selon l'une des revendications 1 à 7,
**caractérisé en ce que**
pour générer le signal correspondant à la décélération, on exploite la pression de frein dans un circuit de frein.

9. Procédé selon l'une des revendications 1 à 8,
**caractérisé en ce que**
pour générer le signal correspondant à la décélération, on exploite une information fournie par un système anti-blocage.

10. Procédé selon l'une des revendications 1 à 9,
**caractérisé en ce que**
pour générer le signal correspondant à la décélération, on exploite le coefficient d'adhérence entre la chaussée et les roues du véhicule.

11. Procédé selon l'une des revendications 1 à 10,
**caractérisé en ce qu'**
on exploite la nature de l'actionnement de la pédale d'accélérateur et/ou de la pédale de frein.

12. Dispositif pour la mise en oeuvre du procédé d'affichage de l'intensité du freinage ou de la décélération d'un véhicule selon les revendications 1 à 11, comprenant
- une installation générant un signal correspondant à la décélération,
- une installation d'affichage qui comporte au moins deux feux de frein indiquant chacun l'information de freinage associée au signal correspondant, et
- une installation de commande qui, sur la base du signal fourni par l'installation de génération de signal, commande l'installation d'affichage,
**caractérisé en ce que**
l'installation de commande et l'installation d'affichage sont réalisées et coopèrent pour mettre en oeuvre le procédé selon l'une quelconque des revendications 1 à 11.
